Europäisches Patentamt

European Patent Office

Office européen des brevets

(11) EP 1 530 132 A2

(19)

(12) # DEMANDE DE BREVET EUROPEEN

(43) Date de publication:
   11.05.2005 Bulletin 2005/19

(51) Int Cl.7: **G06F 13/366**

(21) Numéro de dépôt: 04023275.3

(22) Date de dépôt: 30.09.2004

(84) Etats contractants désignés:
   AT BE BG CH CY CZ DE DK EE ES FI FR GB GR
   HU IE IT LI LU MC NL PL PT RO SE SI SK TR
   Etats d'extension désignés:
   AL HR LT LV MK

(30) Priorité: 14.10.2003 FR 0311973

(71) Demandeur: STMicroelectronics S.A.
   92210 Montrouge (FR)

(72) Inventeurs:
   • **Ries, Gilles**
     **Le Noyaret 38320 Herbeys (FR)**
   • **Agaesse, Jean-Francois**
     **38360 Montferrat (FR)**

(74) Mandataire: **Marchand, André**
   **OMNIPAT,**
   **24 Place des Martyrs de la Résistance**
   **13100 Aix-en-Provence (FR)**

(54) **Procédé d'arbitrage de l'accès à une ressource partagée**

(57) La présente invention concerne un procédé d'arbitrage de l'accès à une ressource (BSH, PPH) partagée par plusieurs éléments électroniques (Mi). Selon l'invention, chaque élément (Mi) se voit attribuer une première valeur de comptage et une première pénalité (MPi), la première valeur de comptage est décrémentée en synchronisation avec un signal d'horloge, et est incrémentée d'une valeur égale à la première pénalité chaque fois que l'élément est sélectionné pour un cycle d'accès. Lorsque plusieurs éléments attendent simultanément d'accéder à la ressource partagée, un élément est sélectionné pour accéder à la ressource si sa première valeur de comptage est inférieure ou égale à un seuil déterminé, et est inférieure aux premières valeurs de comptage des autres éléments ayant émis une requête d'accès.

**Fig. 2**

EP 1 530 132 A2

**Description**

La présente invention concerne un procédé et un dispositif d'arbitrage de l'accès à une ressource partagée par plusieurs éléments.

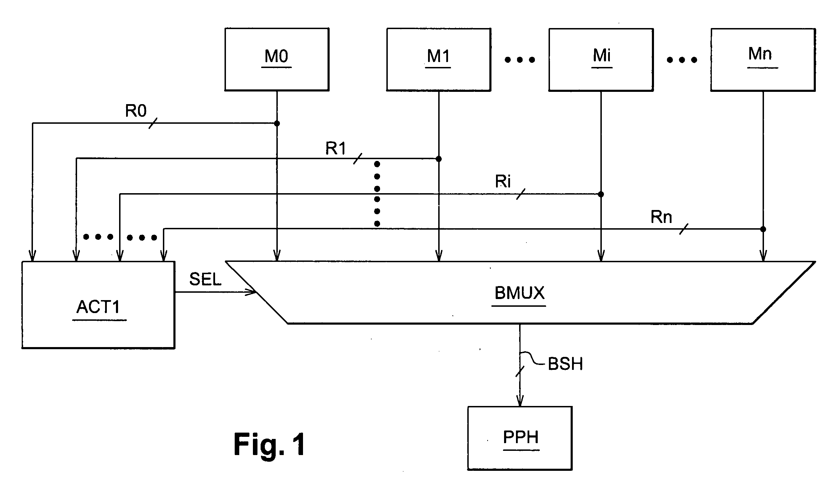

La figure 1 représente schématiquement un exemple de dispositif d'arbitrage de l'accès à une ressource partagée. Un groupe de circuits maîtres M0, M1,...Mi, ...Mn est relié à une ressource partagée par l'intermédiaire d'un circuit de multiplexage BMUX. La ressource partagée comprend ici un bus BSH et au moins un circuit périphérique PPH relié à ce bus, par exemple une mémoire de données et/ou d'instructions formant un circuit esclave. Le groupe de circuits maîtres comprend par exemple des microprocesseurs, un processeur DSP, des co-processeurs, un circuit DMA (circuit d'accès mémoire direct), une caméra vidéo embarquée... Un tel mélange de circuits partageant une ressource commune est courant dans les circuits intégrés pour téléphones mobiles de nouvelle génération.

L'arbitrage des accès à la mémoire PPH est assuré par un dispositif d'arbitrage ACT1 qui reçoit des requêtes d'accès R0, R1,...Ri,...Rn fournies par chacun des circuits maîtres et qui fournit un signal de sélection SEL sur une entrée de contrôle du circuit BMUX, en appliquant une règle d'arbitrage déterminée. Les requêtes Ri et les cycles d'accès à la ressource partagée sont cadencés par un signal d'horloge commun aux circuits maîtres, qui permet de synchroniser les accès à la ressource partagée.

A ce jour, les procédés d'arbitrage connus sont peu satisfaisants et peu adaptés aux combinaisons de plus en plus complexes de circuits maîtres ayant des rôles différents et des besoins différents en ce qui concerne l'accès à la ressource partagée, certains circuits ayant besoin d'accéder à la ressource de façon régulière mais d'une manière ne représentant qu'une faible partie des possibilités d'accès offertes par la ressource, d'autres circuits ayant des besoins d'accès irréguliers pouvant parfois être importants pendant des périodes déterminées, et faibles en dehors de ces périodes.

On distingue ainsi les circuits maîtres à grand débit de données, qui sont peu sensibles au temps de latence (temps d'attente entre les accès à la mémoire partagée). Il s'agit par exemple des microprocesseurs, processeurs, DSP (processeur de traitement de signal numérique) qui ont souvent besoin d'accéder à la mémoire partagée mais peuvent attendre que la mémoire soit disponible pour réaliser les opérations nécessitant un tel accès.

On distingue également les circuits maîtres à faible débit de données mais sensibles au temps de latence, c'est-à-dire pouvant difficilement retarder l'accès à la mémoire partagée. Il s'agit notamment de circuits ayant une mémoire tampon de taille réduite et devant régulièrement échanger des données avec la mémoire partagée, comme des circuits DMA (circuits de gestion d'accès mémoire), notamment lorsque ces circuits fournissent des données à un périphérique de communication (port USB, etc.). Egalement, une caméra vidéo doit transférer dans la mémoire partagée plusieurs images par seconde, lorsqu'elle est utilisée, puis ne nécessite pratiquement plus d'accès à la mémoire entre deux transferts d'images. Une telle caméra vidéo doit donc pouvoir accéder à la mémoire partagée de façon régulière, afin de ne pas perdre des données, car ses mémoires tampon ne peuvent mémoriser qu'une fraction d'image (quelques dizaines ou centaines de points image).

On distingue également les circuits maîtres à grand débit de données nécessitant un accès minimal et quasi-immédiat à la mémoire partagée. Il s'agit par exemple d'un microprocesseur ou d'un processeur DSP en mode interruption, devant transférer ou lire des données (données et/ou instructions) dans la mémoire à tout instant, en fonction d'évènements externes provoquant des interruptions, sans obéir à une loi de récurrence déterminée. De tels circuits ont donc un fort besoin de pouvoir accéder à la mémoire périphérique de façon "instantanée", c'est-à-dire en attendant le moins possible.

Enfin, on distingue les circuits maîtres à débit faible et régulier, mais fonctionnant temporairement en dehors de leurs spécifications usuelles. Ainsi circuit DMA peut parfois avoir besoin d'accéder à la mémoire de façon quasi-instantané (temps de latence faible), par exemple lors du transfert d'une importante masse de données, et parfois avoir un fort besoin d'accès à la mémoire pour des transferts à haut débit tout en étant peu sensible au temps latence. Une caméra vidéo, en dehors de son débit de données cyclique correspondant à un transfert d'images, peut parfois requérir un débit de données élevé.

En définitive, un même circuit maître peut se trouver dans plusieurs des catégories ci-dessus, et présenter des besoins d'accès différents à des instants différents.

Or, les procédés d'arbitrage classiques tels l'arbitrage par priorités fixes et hiérarchisées (priorité par rang croissant ou décroissant) ou par priorités tournantes (procédé "Round Robin") ne permettent pas d'optimiser le partage d'une ressource en présence d'une pluralité de circuits maîtres du type précité, ayant des besoins d'accès différents susceptibles de varier dans le temps.

La présente invention vise ainsi un procédé et un dispositif d'arbitrage qui soient d'une grande souplesse d'emploi et qui soient configurables en fonction des "profils" des éléments partageant la ressource partagée, en termes de besoins d'accès.

A cet effet, une première idée de la présente invention est de prévoir un premier mécanisme d'arbitrage permettant de garantir à chaque élément un accès minimal à la ressource partagée selon des intervalles temps réguliers, selon une règle de partage minimal pouvant être configurée à volonté.

Une autre idée de la présente invention est de prévoir un second mécanisme d'arbitrage permettant de garantir à chaque élément un accès instantané à la ressource partagée sans imposer un intervalle temps déterminé entre deux accès, selon une règle de partage proportionnel pouvant être configurée à volonté.

Plus particulièrement, la présente invention prévoit un procédé d'arbitrage de l'accès à une ressource qui est partagée par plusieurs éléments électroniques et qui est accessible selon des cycles d'accès cadencés par un signal d'horloge, dans lequel chaque élément souhaitant accéder à la ressource partagée émet une requête d'accès, procédé dans lequel : chaque élément se voit attribuer une première valeur de comptage et une première pénalité, la première valeur de comptage de chaque élément est décrémentée, ou incrémentée, en synchronisation avec le signal d'horloge, la première valeur de comptage de chaque élément est incrémentée, ou respectivement décrémentée, d'une valeur égale à la première pénalité, chaque fois que l'élément est sélectionné pour un cycle d'accès, et lorsque plusieurs éléments attendent simultanément d'accéder à la ressource partagée, un élément est sélectionné pour accéder à la ressource si sa première valeur de comptage est inférieure ou égale, ou respectivement supérieure ou égale, à un seuil déterminé, et si sa première valeur de comptage est inférieure, ou respectivement supérieure, aux premières valeurs de comptage des autres éléments ayant émis une requête d'accès.

Selon un mode de réalisation, un élément est sélectionné quelle que soit sa première valeur de comptage, s'il est le seul à demander l'accès à la ressource partagée.

Selon un mode de réalisation, deux éléments susceptibles d'être sélectionnés ont la même première valeur de comptage, l'élément à sélectionner est désigné en appliquant une règle de sélection prédéterminée.

Selon un mode de réalisation, les requêtes d'accès peuvent porter sur plusieurs cycles d'accès successifs et, lorsqu'un élément ayant émis une requête d'accès portant sur plusieurs cycles d'accès est sélectionné, l'accès à la ressource partagée est accordé à l'élément pendant le nombre de cycles d'accès demandés, même si, après le premier cycle d'accès de l'élément, l'élément n'est plus sélectionnable en vertu de sa première valeur de comptage.

Selon un mode de réalisation, la première valeur de comptage d'un élément est inhibée lorsque l'élément n'émet pas de requête d'accès pendant un nombre déterminé de cycles d'accès.

Selon un mode de réalisation, chaque élément se voit attribuer une seconde valeur de comptage et une seconde pénalité, la seconde valeur de comptage de chaque élément est incrémentée, ou décrémentée, d'une valeur égale à la seconde pénalité, chaque fois que l'élément est sélectionné, et lorsque plusieurs éléments attendent simultanément d'accéder à la ressource partagée, si aucun élément n'est sélectionnable en vertu de sa première valeur de comptage, l'élément sélectionné est celui dont la seconde valeur de comptage est inférieure, ou respectivement supérieure, aux secondes valeurs de comptage des autres éléments ayant émis une requête d'accès.

Selon un mode de réalisation, la seconde valeur de comptage d'un élément est maintenue à une valeur déterminée lorsque l'élément n'émet pas de requête d'accès pendant un nombre déterminé de cycles d'accès.

Selon un mode de réalisation, la seconde valeur de comptage d'un élément n'ayant pas émis de requête d'accès pendant un nombre déterminé de cycles d'accès, est maintenue à une valeur égale à la plus faible seconde valeur de comptage des éléments émettant des requêtes d'accès.

Selon un mode de réalisation, la première valeur de comptage de chaque élément est incrémentée, ou respectivement décrémentée, d'une valeur égale à la première pénalité, chaque fois que l'élément est sélectionné en vertu de sa seconde valeur de comptage, et réciproquement la seconde valeur de comptage de chaque élément est également incrémentée, ou respectivement décrémentée, d'une valeur égale à la seconde pénalité, chaque fois que l'élément est sélectionné en vertu de sa première valeur de comptage.

Selon un mode de réalisation, les requêtes d'accès peuvent porter sur plusieurs cycles d'accès successifs et, lorsqu'un élément ayant émis une requête d'accès portant sur plusieurs cycles d'accès est sélectionné, l'accès à la ressource partagée est accordé à l'élément pendant le nombre de cycles d'accès demandés, même si, après le premier cycle d'accès de l'élément, l'élément n'est plus sélectionnable en vertu de ses première et seconde valeurs de comptage.

Selon un mode de réalisation, le procédé est appliqué à un dispositif dans lequel la ressource partagée est un bus de données relié à un ou plusieurs circuits périphériques par l'intermédiaire d'un circuit de multiplexage d'accès, les éléments électroniques étant des circuits maîtres relativement aux circuits périphériques.

Selon un mode de réalisation, le circuit de multiplexage d'accès fournit des signaux de contrôle désignant le circuit maître sélectionné à chaque cycle d'accès, et les signaux de contrôle sont utilisés pour identifier les valeurs de comptage devant être décrémentées ou incrémentées à chaque accès au bus de données.

La présente invention concerne également un dispositif d'arbitrage de l'accès à une ressource partagée par plusieurs éléments électroniques, la ressource partagée étant accessible selon des cycles d'accès cadencés par un signal d'horloge, chaque élément souhaitant accéder à la ressource partagée devant émettre une requête d'accès, le dispositif comprenant des premiers registres pour mémoriser, pour chaque élément, une première pénalité attribuée individuellement à chaque élément, des premiers compteurs pour attribuer individuellement à chaque élément une première valeur de comptage, et pour décrémenter, ou incrémenter, la première valeur de comptage en synchronisation avec le signal d'horloge, et incrémenter, ou respectivement décrémenter, la première valeur de comptage d'une valeur égale à la première pénalité, chaque fois que l'élément correspondant est sélectionné pour un cycle d'accès, et un premier circuit de comparaison pour fournir, lorsque plusieurs éléments attendent simultanément d'accéder à la ressource partagée, un premier signal de sélection désignant un élément dont la première valeur de comptage est inférieure ou égale, ou respectivement supérieure ou égale, à un seuil déterminé, et dont la première valeur de comptage est inférieure, ou respectivement supérieure, aux premières valeurs de comptage des autres éléments ayant émis une requête d'accès.

Selon un mode de réalisation, le dispositif comprend des moyens pour sélectionner un élément qui se trouve seul à demander l'accès à la ressource partagée, quelle que soit la première valeur de comptage de l'élément.

Selon un mode de réalisation, lorsque deux éléments ont la même première valeur de comptage, le premier circuit de comparaison est agencé pour sélectionner l'un de ces éléments selon une règle de sélection prédéterminée.

Selon un mode de réalisation, le dispositif comprend un circuit de gestion des premiers compteurs pour inhiber la première valeur de comptage d'un élément qui n'a pas émis de requête d'accès pendant un nombre déterminé de cycles d'accès.

Selon un mode de réalisation, le dispositif comprend en outre des seconds registres pour mémoriser, pour chaque élément, une seconde pénalité attribuée individuellement à chaque élément, des seconds compteurs pour attribuer individuellement à chaque élément une seconde valeur de comptage, et pour incrémenter, ou décrémenter, la seconde valeur de comptage d'une valeur égale à la seconde pénalité, chaque fois que l'élément correspondant est sélectionné pour un cycle d'accès, et un second circuit de comparaison pour fournir, lorsque plusieurs éléments attendent simultanément d'accéder à la ressource partagée, un second signal de sélection désignant un élément dont la seconde valeur de comptage est inférieure, ou respectivement supérieure, aux secondes valeurs de comptage des autres éléments ayant émis une requête d'accès.

Selon un mode de réalisation, les premier et second signaux de sélection sont appliqués à un circuit multiplexeur dont la sortie fournit un signal de sélection général égal au second signal de sélection lorsque le premier circuit de comparaison ne trouve aucun élément à sélectionner, sinon égal au premier signal de sélection.

Selon un mode de réalisation, la première valeur de comptage de chaque élément est incrémentée, ou respectivement décrémentée, d'une valeur égale à la première pénalité, chaque fois que l'élément est sélectionné en vertu de sa seconde valeur de comptage, et réciproquement la seconde valeur de comptage de chaque élément est incrémentée, ou respectivement décrémentée, d'une valeur égale à la seconde pénalité chaque fois que l'élément est sélectionné en vertu de sa première valeur de comptage.

Selon un mode de réalisation, le dispositif comprend un circuit de gestion des seconds compteurs pour maintenir la seconde valeur de comptage d'un élément à une valeur déterminée lorsque l'élément n'émet pas de requête d'accès pendant un nombre déterminé de cycles d'accès.

Selon un mode de réalisation, le circuit de gestion des seconds compteurs maintient la seconde valeur de comptage d'un élément n'ayant pas émis de requête d'accès pendant un nombre déterminé de cycles d'accès, à une valeur égale à la plus faible seconde valeur de comptage des éléments émettant des requêtes d'accès.

Selon un mode de réalisation, le dispositif comprend un circuit de gestion de requêtes d'accès en rafale qui est agencé pour maintenir la sélection d'un élément sélectionné, même si, après le premier cycle d'accès accordé à l'élément, cet élément n'est pas sélectionnable en vertu de sa première ou seconde valeur de comptage.

Selon un mode de réalisation, le dispositif comprend un circuit de multiplexage d'accès pour relier à la ressource partagée, à chaque cycle d'accès, un élément sélectionné.

Selon un mode de réalisation, le circuit de multiplexage d'accès fournit des signaux de contrôle désignant le circuit maître sélectionné à chaque cycle d'accès, les signaux de contrôle étant appliqués aux compteurs en tant que signaux de chargement, pour le chargement de la première ou de la seconde pénalité.

Selon un mode de réalisation, la ressource partagée est un bus relié à un ou plusieurs circuits périphériques, les éléments électroniques étant des circuits maîtres relativement aux circuits périphériques.

Ces objets, caractéristiques et avantages ainsi que d'autres de la présente invention seront exposés plus en détail dans la description suivante du procédé d'arbitrage selon l'invention et d'un exemple de réalisation d'un dispositif d'arbitrage mettant en oeuvre ce procédé, faite à titre non limitatif en relation avec les figures jointes parmi lesquelles :

- la figure 1 précédemment décrite représente un dispositif classique d'arbitrage de l'accès à une ressource partagée,
- la figure 2 représente un dispositif d'arbitrage de l'accès à une ressource partagée, comprenant un circuit d'arbitrage selon l'invention représenté sous forme de bloc,
- les figures 3A à 3D sont des chronogrammes illustrant une séquence d'arbitrage selon un premier mécanisme d'arbitrage selon l'invention,
- les figures 4A à 4C sont des chronogrammes illustrant une autre séquence d'arbitrage selon le premier mécanisme d'arbitrage selon l'invention,

- les figures 5A à 5E sont des chronogrammes illustrant un exemple de séquence d'arbitrage selon un second mécanisme d'arbitrage selon l'invention,
- les figures 6A et 6B sont des chronogrammes illustrant une séquence d'arbitrage selon une combinaison des deux mécanismes d'arbitrage selon l'invention,
- les figures 7A et 7B sont des chronogrammes illustrant une autre séquence d'arbitrage selon la combinaison des deux mécanismes d'arbitrage selon l'invention, et
- les figures 8A, 8B, 8C représentent un exemple de réalisation du circuit d'arbitrage représenté sous forme de bloc en figure 2.

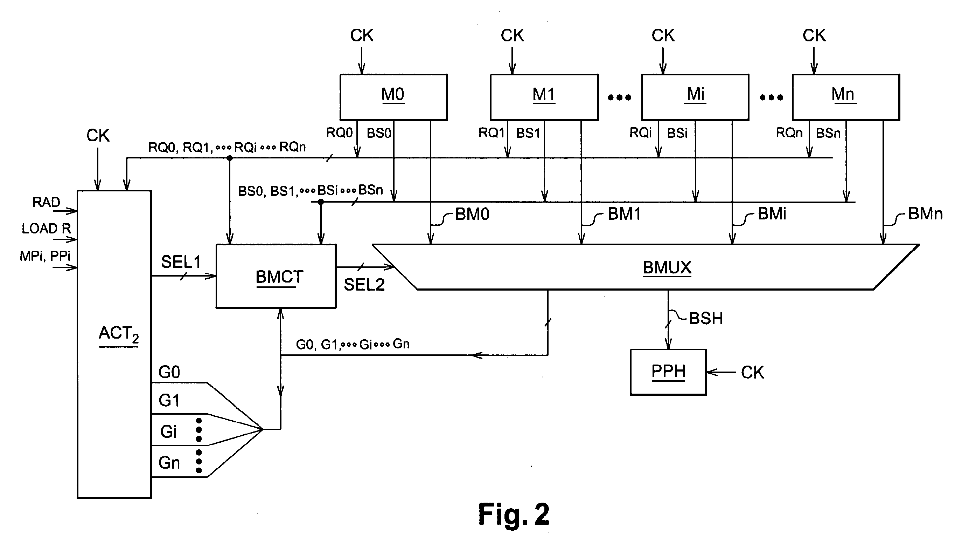

Sur la figure 2, une ressource PPH est partagée par des éléments Mi (M0, M1,...Mn). La ressource comprend un bus BSH relié à un circuit périphérique PPH. Les éléments Mi sont des circuits maîtres relativement au circuit périphérique. Le circuit périphérique est par exemple une mémoire accessible en lecture/écriture.

Dans un souci de simplification du langage, on considérera dans ce qui suit que le bus BSH est la ressource partagée. En effet si plusieurs périphériques se trouvent connectés au bus, chaque circuit maître doit d'abord accéder au bus pour accéder à l'un des périphériques. Le bus est donc, conceptuellement, la première ressource à laquelle les circuits maîtres doivent accéder.

L'accès au bus est contrôlé par un dispositif d'arbitrage comprenant un circuit de multiplexage BMUX, un circuit de gestion des accès en rafale BMCT ("Burst Management Circuit"), et un circuit d'arbitrage ACT2 selon l'invention.

Le circuit de multiplexage BMUX présente n+1 entrées connectées aux circuits maîtres Mi et une sortie connectée au bus BSH. Chaque circuit maître Mi est relié à une entrée du circuit BMUX par l'intermédiaire d'un bus BMi (BM0, BM1,...BMn). Les bus BMi et le bus BSH comprennent par exemple N fils de données et M fils d'adresse en parallèle, et éventuellement divers autres fils de contrôle nécessaires aux échanges de données entre les circuits maîtres et le circuit périphérique. Les données sont donc transférées entre les circuits maîtres et le circuit périphérique par mots de N+M bits en parallèle, via le circuit BMUX.

Chaque circuit maître Mi fournit un signal de requête RQi (RQ1 à RQn) codé sur un bit, et un signal de rafale BSi (BS0 à BSn) codé sur plusieurs bits. Le signal de requête RQi est porté à 1 quand le circuit maître Mi souhaite accéder au bus, tandis que le signal de rafale BSi (signal de "burst") indique le nombre Bi de mots que le circuit maître souhaite, le cas échéant, émettre les un après les autres. Le signal BSi est par exemple codé sur 4 bits et se trouve compris entre 0 et 15. La valeur "0" est la valeur par défaut et signifie qu'un accès est demandé pour un cycle d'accès seulement (Bi=1). La valeur maximale BSi=15 correspond à une requête d'accès pour 16 cycles successifs (Bi=16) .

Le circuit ACT2 selon l'invention fournit un signal de sélection SEL1 qui est appliqué sur une entrée du circuit BMCT. Celui-ci fournit un signal de sélection SEL2 qui est appliqué sur une entrée de contrôle du circuit BMUX. Le circuit BMUX relie au bus BSH le circuit maître Mi qui est désigné par le signal de sélection SEL2.

Le circuit ACT2 reçoit les signaux de requête RQi fournis par les circuits maîtres Mi, tandis que le circuit BMCT reçoit à la fois les signaux de requête RQi et les signaux de rafale BSi. Lorsqu'un circuit maître demande l'accès au bus BSH pour un seul cycle d'accès (BSi=0, soit Bi=1), le circuit BMCT est transparent vis-à-vis du circuit ACT2. Le circuit ACT2 fournit le signal SEL1 de sélection du circuit maître et le signal SEL2 recopie le signal SEL1. Lorsqu'un circuit maître demande l'accès au bus BSH pour plusieurs cycles d'accès (BSi≠0), et lorsque ce circuit maître est sélectionné par le circuit ACT2, le circuit BMCT est transparent pour le premier cycle d'accès puis maintient le signal SEL2 à la valeur initiale du signal SEL1 jusqu'à ce que l'accès en rafale soit terminé, même si le signal SEL1 a entre-temps changé de valeur.

Le circuit BMUX fournit également des signaux de contrôle Gi (G0 à Gn) indiquant, à chaque cycle d'accès, quel est le circuit maître Mi auquel l'accès au bus est accordé. Par exemple, le signal G1 est à 1 quand le circuit maître M1 accède au bus, tandis que les autres signaux G0, G2,... Gn sont à 0. Ces signaux sont gérés automatiquement par le circuit BMUX en fonction du signal de sélection SEL2 reçu sur son entrée de contrôle.

La synchronisation entre ces divers éléments est assurée par un signal d'horloge commun CK. Un cycle d'accès au bus s'étend sur n cycles d'horloge, par exemple deux cycles d'horloge.

Les circuits BMUX et BMCT sont en soi des éléments classiques se trouvant dans des composants standards, par exemple dans le circuit commercialisé par la société ARM® sous la référence BUS-MATRIX. Toutefois, dans le composant BUS-MATRIX, le signal de sélection SEL1 est fourni par un circuit d'arbitrage classique intégré dans le composant, qui offre seulement un arbitrage par priorité fixe.

Ce circuit d'arbitrage classique est remplacé par le circuit ACT2 selon l'invention. Un tel remplacement consiste en une désactivation du circuit d'arbitrage classique, et une greffe du circuit ACT2 sur une entrée de contournement (by-pass) du circuit d'arbitrage classique.

On décrira maintenant les caractéristiques générales du procédé d'arbitrage selon l'invention, et l'on décrira ensuite un exemple de réalisation du circuit d'arbitrage ACT2.

Selon l'invention, la "bande passante" BW de la ressource partagée, ici le bus BSH, est le nombre maximal d'accès au bus par unité de temps, par exemple par seconde. Cette bande passante BW est distribuée aux circuits maîtres selon deux mécanismes d'arbitrage différents, appelés respectivement "arbitrage en accès minimal" et "arbitrage en accès proportionnel", permettant de faire apparaître une "bande passante minimale" MBW et une "bande passante proportionnelle" PBW.

**Bande passante minimale**

La bande passante minimale MBW représente un nombre minimal d'accès par unité de temps qui est garanti à l'ensemble des circuits maîtres. Cette bande passante minimale représente tout ou partie de la bande passante totale BW du bus, et est répartie entre chaque circuit maître en fonction du "profil" de chacun, c'est-à-dire son besoin d'accéder au bus selon des intervalles de temps réguliers. On définit ainsi une bande passante minimale individuelle MBWi pour chaque circuit maître Mi, qui représente le nombre d'accès par unité de temps qui est garanti à chaque circuit maître, la bande passante minimale MBWi attribuée à chaque circuit maître étant une fraction de la bande passante minimale globale MBW.

Plus particulièrement, on attribue à chaque circuit maître une valeur de comptage en accès minimal MCVi, et une pénalité en accès minimal MPi. La valeur de comptage en accès minimal MCVi de chaque circuit maître Mi est décrémentée d'un nombre D à chaque cycle d'horloge, d'une manière égale pour chaque circuit maître, et est incrémentée d'une valeur égale à la pénalité MPi quand un circuit maître obtient un cycle d'accès au bus.

Lorsque plusieurs circuits maîtres Mi tentent simultanément d'accéder au bus, l'accès est accordé au circuit Mi dont la valeur de comptage MCVi est :

- inférieure ou égale à un seuil THR déterminé, par exemple le seuil 0, à partir duquel le circuit maître est considéré comme bénéficiant d'une haute priorité, et
- inférieure aux valeurs de comptage des autres circuits souhaitant accéder au bus.

Si deux circuits maîtres bénéficient d'une haute priorité, c'est celui dont la valeur de comptage est la plus faible (la plus négative, le seuil THR étant ici 0) qui sera le premier sélectionné.

Ainsi, chaque circuit maître Mi a, en moyenne, la possibilité d'accéder au bus tous les C cycles d'horloge, avec C égal à la pénalité en accès minimal MCVi attribuée au circuit maître.

Si un circuit maître Mi sollicite un accès en rafale pour Bi cycles d'accès, sa valeur de comptage MCVi est incrémentée de la pénalité d'accès minimal MPi à chaque cycle d'accès de l'accès en rafale. Au terme de l'accès en rafale, la valeur de comptage MCVi du circuit maître se trouve ainsi augmentée de Bi fois la pénalité d'accès minimal :

$$(1) \qquad MCVi = MCVi + Bi*MPi$$

Si deux circuits maîtres ont à un instant donné la même valeur de comptage, l'arbitrage est assuré en appliquant une règle d'arbitrage prédéterminée de type classique, par exemple une règle d'arbitrage par priorité fixe ou par priorité tournante.

En désignant par MBWi% la bande passante minimale individuelle d'un circuit maître Mi exprimée en valeur relative (pourcentage ramené à 1), on peut démontrer que :

$$(2) \qquad MBWi\% = (D*n/MPi)$$

D étant le décrément de la valeur de comptage à chaque cycle d'horloge, et $n$ le nombre de cycles d'horloge que comprend un cycle d'accès.

La bande passante minimale relative MBW% accordée à l'ensemble des circuits maîtres est ainsi égale à :

$$(3) \quad MBW\% = \left( \sum_{i=0}^{i=n} D*n/MPi \right)$$

Cette bande passante minimale globale exprimée en valeur relative, doit de préférence être inférieure à 1 afin qu'il reste de la bande passante à distribuer, par exemple au moyen du mécanisme d'arbitrage en accès proportionnel décrit plus loin. Toutefois, l'accès au bus peut aussi être entièrement géré par le mécanisme d'arbitrage en accès minimal.

Dans ce qui suit, D sera considéré comme étant toujours égal à 1, chaque valeur de comptage en accès minimal étant ainsi décrémentée de 1 à chaque cycle d'horloge.

A titre d'exemple, supposons que le bus partagé BSH soit cadencé par un signal d'horloge à 70 MHz, qu'un cycle d'accès au bus dure deux cycles d'horloge ($n$=2). Il vient que le bus est capable de fournir 35 MA/s ("Méga Accès par seconde") soit ici $35*10^6$ accès par seconde, cette valeur représentant la bande passante totale BW du bus.

Supposons ensuite que seuls les circuits maîtres M0 et M1 soient actifs, que le circuit M0 ait besoin de 5 MA/s pour fonctionner correctement, et que le circuit M1 ait besoin de 7 MA/s. Avec une fréquence d'horloge de 70 MHz et avec D=1, le circuit maître M0 aura donc besoin d'accéder au bus tous les 14 cycles d'horloge (70/5) et le circuit maître M1 aura besoin d'accéder au bus tous les 10 cycles d'horloge (70/7). On attribue dans ce cas aux circuits maîtres M0, M1 les pénalités en accès minimal MP0, MP1 suivantes :

$$(4) \qquad MP0 = 70/5 = 14$$

$$(5) \qquad MP1 = 70/7 = 10$$

La bande passante minimale, exprimée en valeur relative (bande passante minimale relative) est ici égale à :

$$(6) \qquad MBW\% = 2/7 + 2/5 = 0,34$$

soit 34% de la bande passante totale BW, dont 20% sont alloués au circuit M1 et 14% alloués au circuit M0. Les deux circuits maîtres reçoivent ainsi au total une bande passante minimale de 12 MA/s. Il reste 23 MA/s de bande passante à distribuer sous forme de bande passante proportionnelle, d'une manière décrite plus loin.

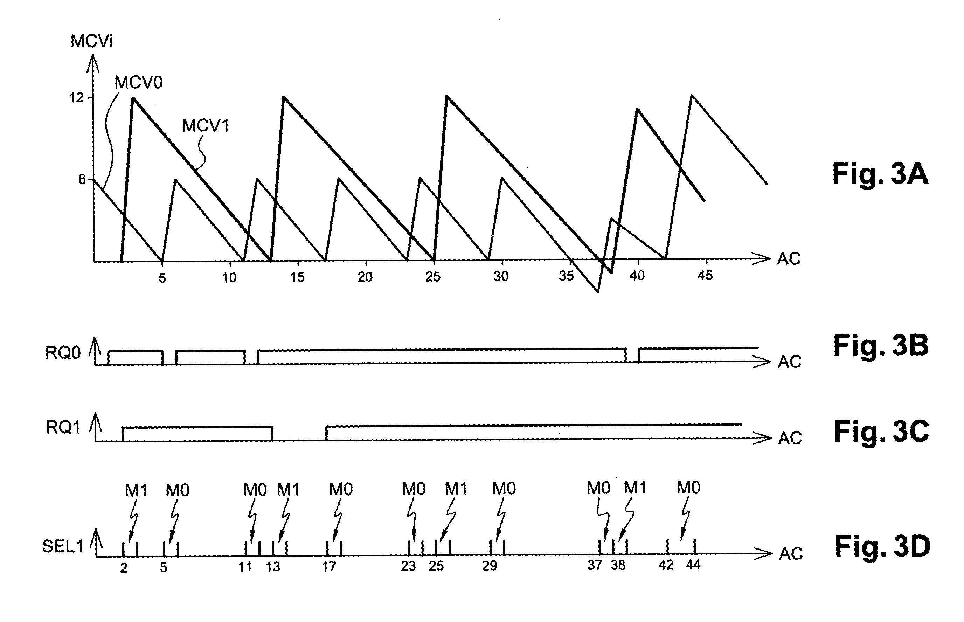

Les figures 3A à 3D illustrent une séquence d'arbitrage en accès minimal, l'axe horizontal des figures représentant des cycles d'accès AC. La figure 3A représente les valeurs de comptage MCV0, MCV1 des circuits maîtres M0, M1. La figure 3B représente le signal de requête RQ0 fourni par le circuit M0 et la figure 3C représente le signal de requête RQ1 fourni par le circuit M1 ces signaux étant mis à 1 lorsqu'un accès au bus est demandé. La figure 3D représente les cycles pendant lesquels les circuits M0, M1 ont accès au bus (signal SEL1).

Sur la figure 3A, la pénalité en accès minimal attribuée au circuit M0 est égale à 6 et la pénalité en accès minimal attribuée au circuit M1 est égale à 12. Le seuil THR de haute priorité est ici égal à 0, comme proposé plus haut.

A chaque accès au bus, le circuit M0 voit sa valeur de comptage MCV0 incrémentée de 6, et le circuit M1 voit sa valeur de comptage MCV1 incrémentée de 12, chaque circuit obtenant en principe l'accès au bus lorsque sa valeur de comptage atteint le seuil 0. Toutefois au cycle 35 la valeur de comptage MCV0 du circuit M0 continue d'être décrémentée vers les valeurs négatives. En effet, on suppose ici que l'accès au bus ne peut être accordé au circuit M0 car d'autres circuits maîtres, ayant des valeurs de comptage inférieures à celle du circuit M0, sont prioritaires (ces autres valeurs de comptage ne sont pas représentées sur la figure dans un souci de simplicité). Ainsi, le circuit M0 doit attendre le cycle 37 pour accéder au bus. Au cycle 37, la valeur de comptage MCV0 est incrémentée de 6 mais présente, après incrémentation, une valeur inférieure à 6, ayant été incrémentée à partir d'une valeur négative. Ainsi, le circuit M0 va rattraper son retard au cours des cycles suivants, puisque le seuil 0 sera plus vite atteint. De même, au cycle 37, la valeur de comptage MCV1 du circuit M1 atteint le seuil 0 mais l'accès ne peut être accordé, puisqu'il est prioritairement accordé au circuit M0, dont la valeur de comptage est plus faible. La valeur de comptage MCV1 tend donc également vers une valeur négative, jusqu'au cycle 38 où l'accès est accordé au circuit M1 (voir également fig. 3D).

Bien entendu, ce mécanisme d'arbitrage n'intervient qu'en cas de collision entre des requêtes d'accès, et l'on suppose donc, dans l'exemple de la figure 3, qu'il existe à chaque instant une pluralité d'autres circuits maîtres qui attendent d'accéder au bus ou qui accèdent au bus, dont les valeurs de comptage n'ont pas été représentées dans un souci de simplicité.

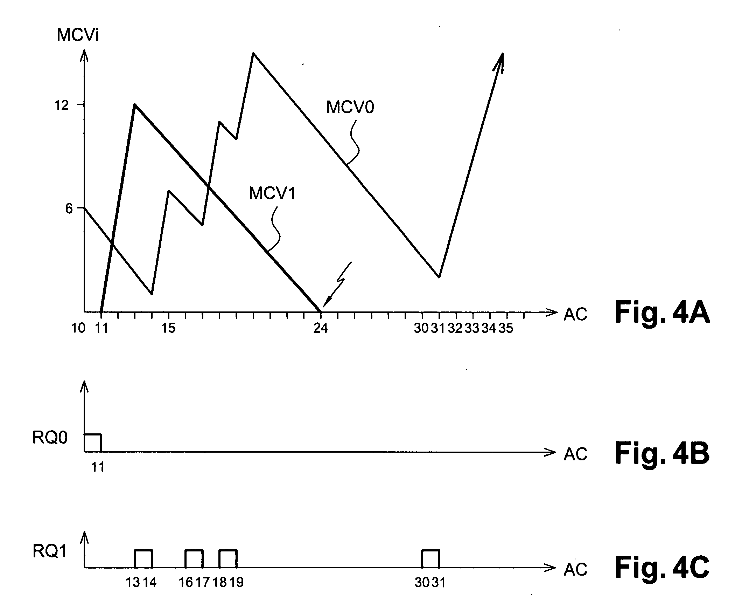

Inversement, si un circuit maître est seul à demander l'accès au bus, l'accès lui est accordé quelle que soit sa valeur de comptage en accès minimal. Toutefois sa valeur de comptage continue d'être incrémentée à chaque accès accordé. Si d'autres circuits maîtres émettent ensuite des requêtes d'accès, le circuit maître ayant été le seul à profiter du bus se retrouve avec une très forte valeur de comptage et doit attendre que les cotas d'accès au bus auxquels ont droit les autres circuits maîtres aient été utilisés par ces derniers avant de pouvoir à nouveau accéder au bus. Les figures 4A à 4C illustrent un tel cas de figure. La figure 4A représente les valeurs de comptage MCV0, MCV1 des circuits maîtres M0, M1, la figure 4B représente le signal de requête RQ0 du circuit M0 et la figure 4C le signal de requête RQ1 du circuit M1. Les pénalités en accès minimal des circuits M0, M1 sont toujours égales à 6 et à 12, respectivement.

Après avoir accédé au bus au cycle 11, le circuit M1 reste silencieux et ne demande plus l'accès au bus. Le circuit M0 bénéficie donc de l'entière disponibilité du bus (on suppose ici qu'aucun autre circuit maître n'est actif). Ainsi, le circuit M0 sollicite l'accès au bus aux cycles 13, 16, 18, et l'obtient aux cycles immédiatement suivants 14, 17, 19, bien que sa valeur de comptage MCV0 n'ait pas atteint le seuil 0. A chaque accès accordé, la valeur de comptage MCV0 continue d'augmenter. Au cours du cycle 30 le circuit M0 émet une requête d'accès accompagnée d'un signal de rafale BSO (BSi avec i=0) différent de 0, par exemple égal à 15, soit 16 accès successifs demandés. Ainsi, à compter du cycle 31 et à chaque cycle d'accès suivant, la valeur de comptage MCV0 est incrémentée de 6 et tend vers des valeurs élevées se trouvant en dehors de l'échelle de la figure 4A.

Un mécanisme d'inhibition des valeurs de comptage est de préférence prévu, lorsque les circuits maîtres n'émettent pas de requête pendant un nombre déterminé de cycles d'accès. Ce mécanisme d'inhibition consiste par exemple à forcer à 0 la valeur de comptage du circuit maître inactif. Ainsi, sur l'exemple de la figure 4A, la valeur de comptage MCV1 est maintenue à 0 lorsqu'elle atteint le 0, car le circuit M1 n'a pas émis de requête depuis plus de 10 cycles d'accès. En pratique, il est toutefois préférable de choisir un seuil d'inactivité supérieur à la durée s'écoulant entre l'instant de l'application de la pénalité et l'instant ou le seuil de haute priorité est atteint (soit la durée de la "dent de scie" sur la figure 4A) . Cela revient à attendre que la valeur de comptage ait atteint des valeurs négatives avant de l'inhiber en la ramenant à 0.

**Bande passante proportionnelle**

Selon l'invention, la bande passante proportionnelle PBW est la partie de la bande passante totale de la ressource partagée qui est distribuée aux circuits maîtres au moyen du mécanisme d'arbitrage en accès proportionnel selon l'invention.

Comme la bande passante minimale, cette bande passante proportionnelle représente tout ou partie de la bande passante totale BW de la ressource partagée, et est répartie entre chaque circuit maître en fonction du "profil" de chacun, c'est-à-dire ici selon son besoin instantané d'accéder au bus.

On définit ainsi une bande passante proportionnelle individuelle PBWi pour chaque circuit maître, qui est une partie de la bande passante proportionnelle globale PBW. Cette bande passante proportionnelle individuelle PBWi est attribuée au moyen d'une valeur de comptage en accès proportionnel PCVi propre à chaque circuit maître Mi, et d'une pénalité en accès proportionnel PPi, également propre à chaque circuit maître Mi.

La valeur de comptage PCVi de chaque circuit maître est incrémentée d'une valeur égale à la pénalité PPi chaque fois que le circuit maître obtient l'accès au bus pour un cycle d'accès. Lorsque plusieurs circuits maîtres attentent simultanément d'accéder au bus, l'accès est accordé à celui dont la valeur de comptage est la plus faible.

Comme précédemment, si deux circuits maîtres présentent la même valeur de comptage en accès proportionnel, l'arbitrage est effectué selon une règle d'arbitrage prédéterminée, par exemple par priorité fixe ou tournante.

Ainsi, chaque circuit maître Mi a, en moyenne, la possibilité d'accéder au bus dans une proportion définie par sa pénalité en accès proportionnel PPi.

Si un circuit maître Mi sollicite un accès en rafale pour Bi cycles d'accès, sa valeur de comptage en accès proportionnel PCVi est comme précédemment incrémentée à chaque accès accordé, de sorte que la valeur de comptage en accès proportionnel PCVi est augmentée de Bi fois la pénalité en accès proportionnel au terme de l'accès en rafale :

$$(7) \qquad PCVi = PCVi + Bi*PPi$$

En désignant par PBWi% la bande passante proportionnelle relative (pourcentage ramené à 1) attribuée à chaque circuit maître Mi au sein de la bande passante totale BW, on peut montrer que :

$$(8) \quad PBWi\% = \frac{1/PAPi}{\displaystyle\sum_{i=0}^{i=n} 1/PAPi}$$

A titre d'exemple, supposons que les pénalités suivantes soient attribuées aux circuits maîtres M0, M1, M2 :

$$(9) \qquad PP0 = 2$$

$$(10) \qquad PP1 = 3$$

$$(11) \qquad PP2 = 6$$

Il vient que les bandes passantes proportionnelles relatives PBW0%, PBW1%, PBW3% attribuées aux circuits maîtres M0, M1 M2 sont égales à :

$$(12) \qquad PBW0\% = 1/2, \text{ soit } 50\% \text{ de la bande passante totale,}$$

$$(13) \qquad PBW1\% = 1/3, \text{ soit } 33\% \text{ de la bande passante totale,}$$

$$(14) \qquad PBW2\% = 1/6, \text{ soit } 16\% \text{ de la bande passante totale.}$$

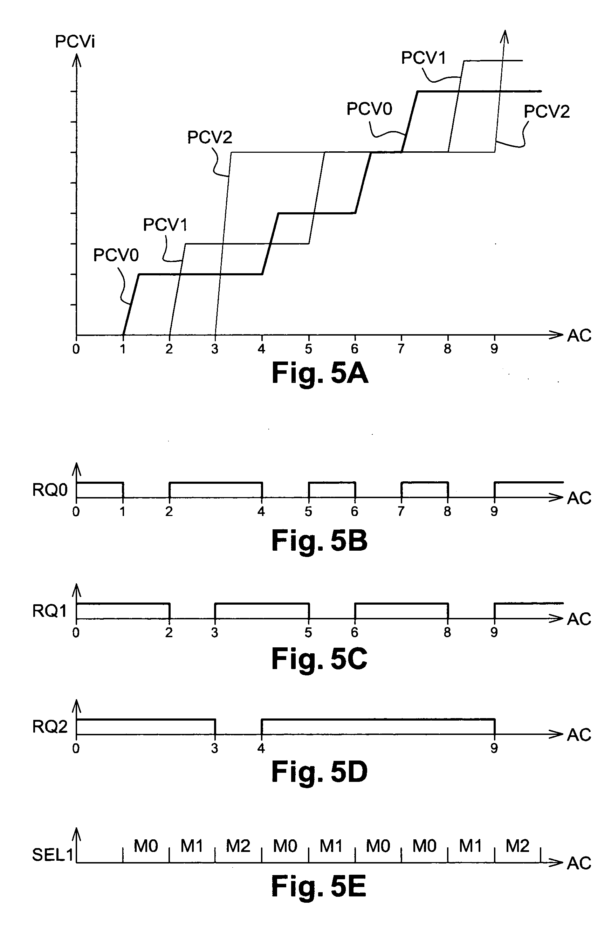

Les figures 5A à 5E illustrent un exemple d'arbitrage en accès proportionnel, l'axe horizontal des figures représentant des cycles d'accès AC. La figure 5A représente les valeurs de comptage PCV0, PCV1, PCV2 des circuits maîtres M0, M1, M2. Les figures 5B, 5C, 5D représentent respectivement les requêtes d'accès RQ0, RQ1, RQ2 fournies par les circuits maîtres. La figure 5E représente les cycles pendant lesquels les circuits M0, M1, M2 ont accès au bus (signal SEL1) .

Conformément à l'exemple décrit plus haut, la pénalité PP0 attribuée au circuit M0 est égale à 2, la pénalité PP1 attribuée au circuit M1 est égale à 3 et la pénalité PP2 attribuée au circuit M2 est égale à 6. Au commencement de l'arbitrage, toutes les valeurs de comptage sont identiques et l'arbitrage se fait selon une règle prédéterminée, ici en attribuant une priorité inversement proportionnelle au rang de chaque circuit maître. Ainsi, l'accès est tout d'abord accordé au circuit M0, puis au circuit M1, etc.. Les valeurs de comptage PCV0, PCV1, PCV2 des circuits M0, M1, M2 sont incrémentées respectivement de 2, 3 ou 6, à chaque accès accordé. Il apparaît sur la figure 5E que le circuit M0 bénéficie du plus grand nombre d'accès car il bénéficie d'une bande passante proportionnelle relative de 50% (cf. relation 12 ci-dessus). Inversement, le circuit M2 bénéficie de la plus faible bande passante proportionnelle et doit attendre entre les cycles 4 et 9 que les circuits M0, M1 aient effectué plusieurs accès au bus pour que sa valeur de comptage devienne inférieure à celles des circuits M0, M1. De plus, au cycle 7, toutes les valeurs de comptage sont égales et le circuit M2, qui bénéficie de la plus faible priorité en raison de son rang i=2 plus élevé que les rangs 0 et 1, doit attendre que les circuits M0, M1 aient eu accès au bus avant que sa valeur de comptage soit la plus faible des trois.

Comme indiqué plus haut, le mécanisme d'arbitrage en accès proportionnel n'intervient qu'en cas de collision entre requêtes. Si l'un des circuits maîtres est le seul à demander l'accès au bus, cet accès lui est accordé même si sa valeur de comptage en accès proportionnel n'est pas la plus faible. Ainsi, une valeur de comptage en accès proportionnel n'est pas prise en compte dans la comparaison des valeurs de comptage, lorsque le circuit maître correspondant n'a pas émis de requête d'accès.

La combinaison des deux mécanismes d'arbitrage sera maintenant décrite.

**Combinaison des deux mécanismes d'arbitrage**

Pour assurer la cohérence de la combinaison des deux mécanismes d'arbitrage, l'arbitrage en accès minimal est prioritaire sur l'arbitrage en accès proportionnel. Cela signifie qu'un circuit maître prioritaire en accès minimal l'emporte sur un circuit maître prioritaire en accès proportionnel, et que le mécanisme d'arbitrage en accès proportionnel n'intervient que lorsque l'arbitrage en accès minimal ne désigne aucun circuit maître (notamment lorsque aucune valeur de comptage en accès minimal n'a atteint le seuil THR). Il vient que :

$$(15) \qquad BW = MBW + PBW$$

$$(16) \qquad PBW = BW - MBW$$

Ainsi, par exemple, si 40% de la bande passante totale est réservée en tant que bande passante minimale, il reste 60% de la bande passante à distribuer sous forme de bande passante proportionnelle. Toutefois, il s'agit là d'une évaluation simplifiée des effets de la combinaison, comme cela apparaîtra par la suite.

En effet, toujours pour des raisons de cohérence de la combinaison, la valeur de comptage en accès proportionnel $PCV_i$ de chaque circuit maître est de préférence incrémentée de la pénalité en accès proportionnel $PP_i$ chaque fois que le circuit maître obtient l'accès au bus pour un cycle d'accès, que cet accès soit accordé en vertu du mécanisme d'arbitrage en accès minimal ou du mécanisme d'arbitrage en accès proportionnel. Réciproquement, la valeur de comptage en accès minimal $MCV_i$ de chaque circuit maître est de préférence incrémentée de la pénalité en accès minimal $MP_i$ chaque fois que le circuit maître obtient l'accès au bus pour un cycle d'accès, que cet accès soit accordé en vertu du mécanisme d'arbitrage en accès minimal ou du mécanisme d'arbitrage en accès proportionnel.

Dans ces conditions, des interactions se produisent entre les deux bandes passantes, pour un même circuit maître. Schématiquement, si un circuit maître se voit attribuer une bande passante minimale supérieure à sa bande passante proportionnelle, les accès au bus seront le plus fréquemment accordés au titre de la bande passante minimal et vont faire saturer la valeur de comptage en accès proportionnel, en provoquant une sorte de désactivation du mécanisme d'arbitrage en accès proportionnel pour ce circuit maître. Inversement, si la bande passante minimale attribuée est inférieure à la bande passante proportionnelle, les accès au bus seront le plus fréquemment accordés au titre de la bande passante proportionnelle vont faire saturer les valeurs de comptage en accès minimal, en provoquant ici une sorte de désactivation du mécanisme d'arbitrage en accès minimal. Cependant, comme les besoins des circuits maîtres peuvent varier dans le temps, les deux mécanismes pourront aussi intervenir en alternance sur des périodes de temps déterminées. Par exemple, un circuit maître pourra tantôt accéder à la ressource au titre de sa valeur de comptage en accès minimal (notamment dans un système momentanément surchargé) et tantôt accéder à la ressource au titre de sa valeur de comptage en accès proportionnel (quand l'encombrement du système diminue).

Ceci sera mieux compris à la lumière des deux exemples décrits ci-après, qui illustrent deux situations extrêmes où l'un des mécanismes d'arbitrage se désactive au profit de l'autre.

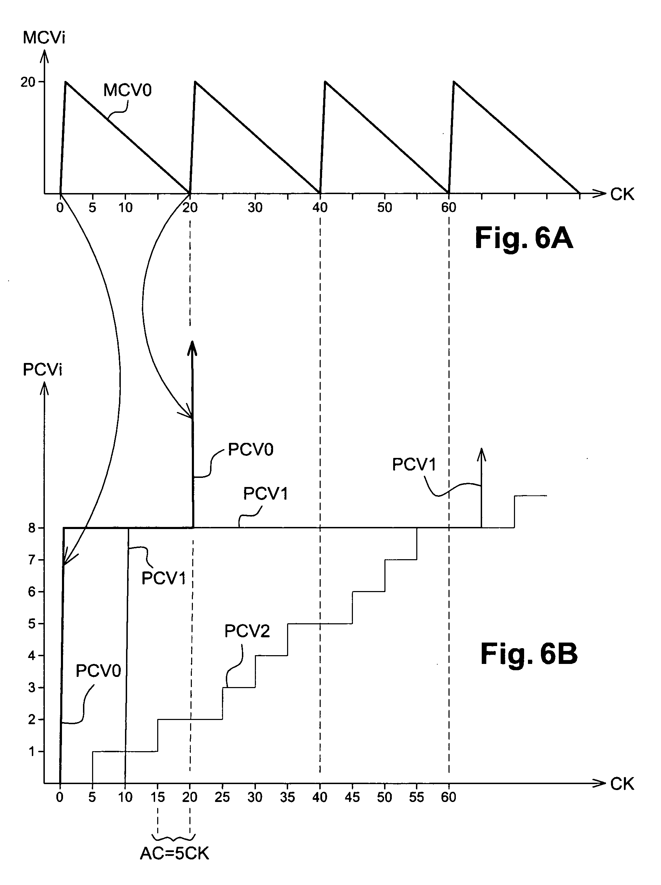

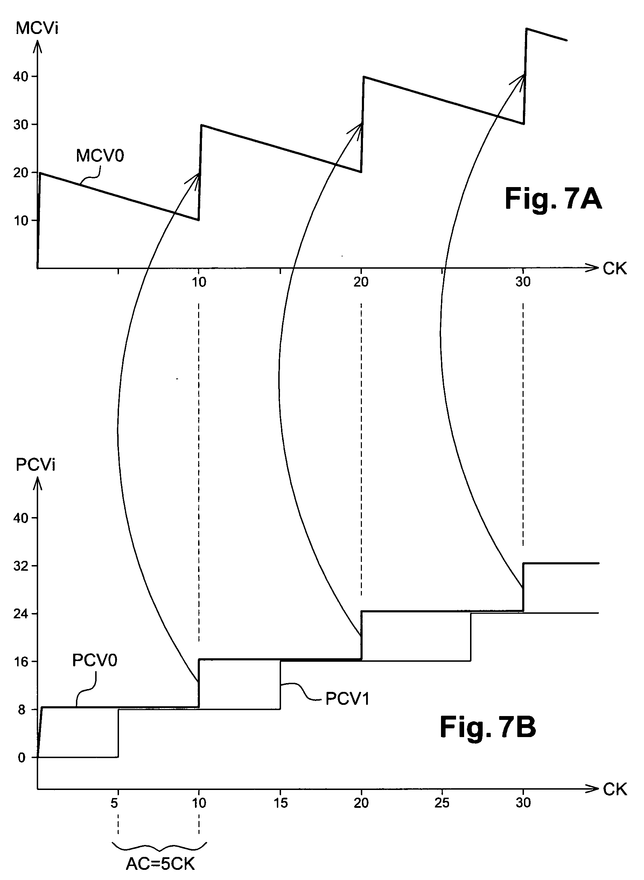

Les figures 6A, 6B et 7A, 7B représentent deux séquences d'arbitrage faisant intervenir les deux mécanismes d'arbitrage. Dans les exemples représentés, on suppose que les données suivantes sont fournies (cahier des charges) :

- Fréquence du signal d'horloge CK : 100 MHz,
- Nombre de cycles d'horloge par cycle d'accès : 5
- Bande passante totale de la ressource partagée : 20 MA/s
- Décrément appliqué aux valeurs de comptage $MCV_i$ à chaque cycle d'horloge (décrément D) : 1
- Circuits maîtres partageant la ressource : M0, M1, M2
- Bande passante minimale souhaitée pour M0 : 5 MA/s
- Bande passante proportionnelle souhaitée pour M0 : 10%
- Bande passante minimale souhaitée pour M1 : néant
- Bande passante proportionnelle souhaitée pour M1 : 10%
- Bande passante minimale souhaitée pour M2 : néant
- Bande passante proportionnelle souhaitée pour M2 : 80% Au vu de ce cahier des charges, le paramétrage suivant est choisi :

- Circuit maître M0 :

    - Pénalité en accès minimal: 100/5 = 20
    - Pénalité en accès proportionnel: 8

- Circuit maître M1

    - Pénalité en accès minimal: 0
    - Pénalité en accès proportionnel: 8

- Circuit maître M2

    - Pénalité en accès minimal: 0
    - Pénalité en accès proportionnel: 1

Ces données sont communes aux séquences représentées sur les figures 6A, 6B et 7A, 7B.

Cas N°1, figures 6A, 6B

On suppose ici que les circuits M0, M1, M2 sont actifs et sollicitent en permanence l'accès au bus.
La figure 6A représente la valeur de comptage en accès minimal MCV0 du circuit M0, les valeurs de comptage en accès minimal des autres circuits étant inhibées en raison de la valeur nulle attribuée à leurs pénalités en accès minimal. La figure 6B représente les valeurs de comptage en accès proportionnel PCV0, PCV1, PCV2 des circuits M0, M1, M2. L'axe horizontal des figures 6A, 6B est gradué ici en cycles d'horloge CK.
Théoriquement, les circuits M0, M1, M2 obtiennent 10%, 10% et 80% de la bande passante au titre de l'arbitrage en accès proportionnel, soit respectivement 2 MA/s, 2 MA/s, 16 MA/s.
Toutefois, les 2 MA/s attribués au circuit M0 au titre de l'arbitrage en accès proportionnel, sont inférieurs aux 5 MA/s attribués au titre de l'arbitrage en accès minimal. Ainsi, le circuit M0 est suffisamment servi au titre de l'arbitrage en accès minimal (5 MA/s) et sa bande passante en accès proportionnel n'est pas utilisée. Il apparaît ainsi en figure 6B que la valeur de comptage en accès proportionnel PCV0 du circuit M0 augmente rapidement car elle est incrémentée à chaque fois que l'accès est accordé au circuit M0 en vertu de l'arbitrage en accès minimal (soit tous les 20 cycles d'horloge, lorsque la valeur de comptage MCV0 atteint le seuil 0, Cf. figure 6A). Ainsi, le circuit M0 n'obtient jamais l'accès à la ressource au titre de l'arbitrage en accès proportionnel, car sa valeur de comptage PCV0 reste supérieure à celles des circuits M1, M2. La bande passante qui reste disponible pour l'arbitrage proportionnel est donc égale à 20 - 5 = 15 MA/s, et est partagée par les deux circuits M1, M2, qui reçoivent respectivement une bande passante de 1,66 MA/s ((10%/(10%+80%))*15 MA/s) et de 13,66 MA/s ((80%/(10%+80%))*15 MA/s).

Cas N°2, figures 7A, 7B

On suppose ici que le circuit M2 est arrêté, que les circuits M0, M1 sont actifs et sollicitent en permanence l'accès au bus.
La figure 7A représente la valeur de comptage en accès minimal MCV0 du circuit M0. La figure 7B représente les valeurs de comptage en accès proportionnel PCV0, PCV1 des circuits M0, M1. L'axe horizontal des figures est comme précédemment gradué en cycles d'horloge.
Les circuits M0, M1 ayant la même pénalité en accès proportionnel, ils reçoivent chacun 50% de la bande passante, soit 10 MA/s chacun. Or, les 10 MA/s attribués au circuit M0 au titre de l'arbitrage en accès proportionnel sont supérieurs aux 5 MA/s attribués au titre de l'arbitrage en accès minimal. Ainsi le circuit M0 est suffisamment servi au titre de l'arbitrage en accès proportionnel et sa bande passante en accès minimal n'est pas utilisée. Il apparaît ainsi en figure 7A que la valeur de comptage en accès minimal MCV0 du circuit M0 augmente rapidement à chaque accès accordé en vertu de l'arbitrage en accès proportionnel, lorsque sur la figure 7B la valeur de comptage PCV0 est inférieure à celle du circuit M1. Ainsi, le circuit M0 n'obtient jamais l'accès à la ressource au titre de l'arbitrage en accès minimal, car sa valeur de comptage MCV0 reste toujours supérieure à 0. Lorsque les valeurs de comptage PCV0, PCV1 sont égales, la priorité est arbitrairement accordée au circuit M0.
La combinaison des deux mécanismes d'arbitrage selon l'invention conduit donc avantageusement à une répartition dynamique de la bande passante en fonction de l'activité des éléments partageant la ressource commune.
Cela apparaît clairement sur le tableau ci-après, qui représente la répartition dynamique de la bande passante totale BW entre quatre circuits M1, M2, M3, M4.
Dans cet exemple, chaque circuit M1, M2, M3, M4 dispose d'une bande passante théorique en accès minimal (sans tenir compte des interactions) définie ci-après :

MBW1 = 10% BW
MBW2 = 20% BW
MBW3 = 10% BW
MBW4 = 10% BW

Chaque circuit M1, M2, M3 , M4 dispose également d'une bande passante théorique en accès proportionnel (sans tenir compte des interactions) définie ci-après :

PBW1 = 30% BW
PBW2 = 10% BW
PBW3 = 5% BW
PBW4 = 10% BW

Les pénalités en accès minimal et en accès proportionnel sont choisies de manière que la répartition de la bande passante théorique soit conforme aux valeurs indiquées ci-dessus.

La colonne 1 du tableau ("cas A") décrit le résultat de l'arbitrage quand les circuits M1, M2, M3, M4 sont actifs et sollicitent en permanence l'accès à la ressource partagée. La colonne 2 du tableau ("cas B") décrit le résultat de l'arbitrage quand le circuit M1, par exemple une caméra vidéo, est arrêté (OFF), tandis que les circuits M2, M3, M4 sont actifs et sollicitent en permanence l'accès à la ressource partagée. La colonne 3 du tableau ("cas C") décrit le résultat de l'arbitrage quand les circuits M3, M4, par exemple des microprocesseurs ou des co-processeurs, sont arrêtés (OFF), tandis que les circuits M1, M2 sont actifs et sollicitent en permanence l'accès à la ressource partagée.

La répartition des bandes passantes individuelles varie de façon dynamique pour occuper toute la bande passante de la ressource partagée, en fonction de la prépondérance d'un mécanisme sur l'autre. Les résultats donnés dans le tableau sont purement indicatifs et ont été déterminés par un calcul itératif permettant d'estimer les degrés de prépondérance dans chaque cas de figure.

| | % Théorique | Cas A | Cas B | Cas C |
|---|---|---|---|---|
| **MBW1** | 10% BW | 0% | 0% (OFF) | 0% |
| **MBW2** | 20% BW | 20% | 0% | 0% |
| **MBW3** | 10% BW | 10% | 0% | 0% (OFF) |
| **MBW4** | 10% BW | 0% | 0% | 0% (OFF) |
| **PBW1** | 30% BW | 52,5% | 0% (OFF) | 75% |
| **PBW2** | 10% BW | 0% | 40% | 25% |
| **PBW3** | 5% BW | 0% | 20% | 0% (OFF) |
| **PBW4** | 10% BW | 17,5% | 40% | 0% (OFF) |
| Total **M1** | - | 52,5% | 0% (OFF) | 75% |
| Total **M2** | - | 20% | 40% | 25% |
| Total **M3** | - | 10% | 20% | 0% (OFF) |
| Total **M4** | - | 17,5% | 40% | 0% (OFF) |

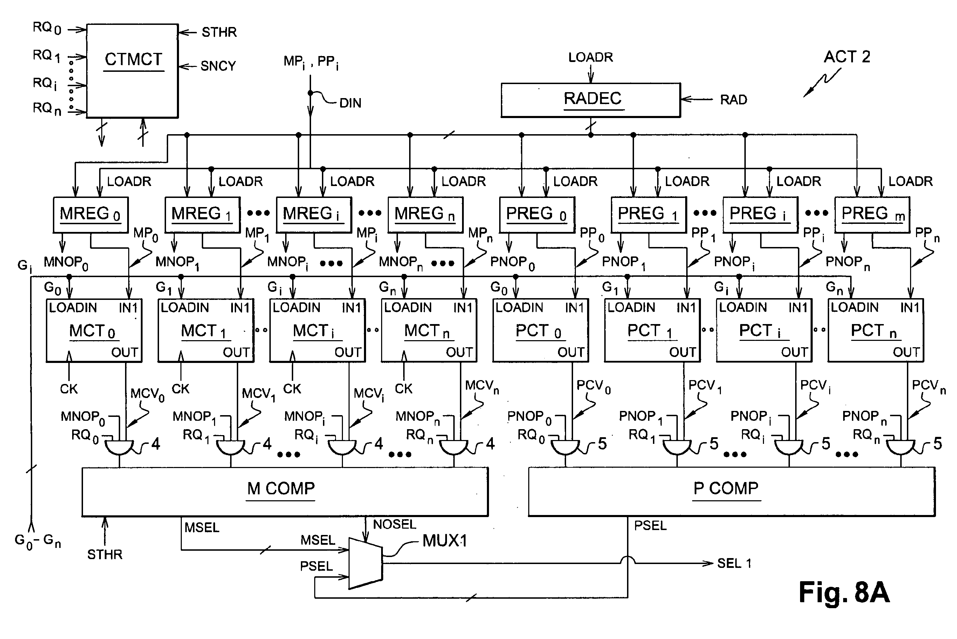

La figure 8A représente un exemple de réalisation du circuit d'arbitrage ACT2.

Le circuit ACT2 comprend des registres MREGi (MREG0, MREG1,...MREGn) pour enregistrer des pénalités MPi du mode d'arbitrage en accès minimal MPi, et des registres PREGi (PREG0, PREG1,...PREGn) pour enregistrer les pénalités PPi du mode d'arbitrage en accès proportionnel. Chaque registre MREGi, PREGi est relié à une entrée DIN du circuit ACT2, sur laquelle les pénalités MPi, PPi à charger dans les registres sont appliquées. La sélection de chaque registre pour le chargement d'une pénalité est assurée par un circuit décodeur d'adresse RADEC. Ce dernier reçoit sur une première entrée une adresse RAD désignant le registre à sélectionner et sur une seconde entrée un signal de chargement LOADR, et applique le signal LOADR au registre désigné par l'adresse RAD.

Le circuit ACT2 comprend également des compteurs MCTi (MCT0, MCT1...MCTn) contenant les valeurs de comptage en accès minimal MCVi, et des compteurs PCTi (PCT0, PCT1...PCTn) contenant les valeurs de comptage en accès proportionnel PCVi.

Chaque compteur MCTi comprend une entrée additionneuse IN1, une entrée de chargement LOADIN, et une sortie OUT. L'entrée additionneuse IN1 est reliée à la sortie d'un registre MREGi de rang correspondant, pour recevoir la pénalité en accès minimal MPi correspondante. L'entrée LOADIN reçoit un signal de contrôle Gi de rang correspondant, fourni par le circuit de multiplexage BMUX, Cf. figure 2.

De façon similaire, chaque compteur PCTi comprend une entrée additionneuse IN1, une entrée de chargement LOADIN, et une sortie OUT. L'entrée additionneuse IN1 est reliée à la sortie d'un registre PREGi de rang correspondant, pour recevoir la pénalité en accès proportionnel PPi correspondante. L'entrée LOADIN reçoit un signal de contrôle Gi de rang correspondant.

Ainsi, lorsqu'un signal de contrôle Gi passe à 1 (ce qui signifie que le circuit maître correspondant Mi a eu l'accès au bus BSH) le compteur en accès minimal MCTi de rang correspondant charge la pénalité en accès minimal MPi et l'additionne à la valeur courante de sa valeur de comptage MCVi. Simultanément, le compteur en accès proportionnel PCTi de rang correspondant charge la pénalité en accès proportionnel PPi et l'additionne à la valeur courante de sa valeur de comptage PCVi.

Les compteurs MCTi comportent en outre une entrée de synchronisation recevant le signal d'horloge CK, et sont agencés pour décrémenter par 1 (D=1) les valeurs de comptage en accès minimal MCVi, à chaque cycle du signal d'horloge CK.

Les valeurs de comptage en accès minimal MCVi fournies par les compteurs MCTi sont appliquées sur des entrées d'un circuit de comparaison MCOMP, par l'intermédiaire de portes logiques 4 de type ET. Chaque porte ET reçoit sur une deuxième entrée le signal de requête RQi émis par le circuit maître Mi de rang correspondant, et sur une troisième entrée un signal MNOPi (MNOP0, MNOP1,...MNOPn) fournit par le registre MREGi de rang correspondant. Lorsqu'un circuit maître Mi n'émet pas de requête d'accès et maintient à 0 le signal RQi, la porte ET correspondante n'est pas passante et la valeur de comptage MCVi n'est pas appliquée au circuit de comparaison MCOMP. De même, lorsqu'un registre MREGi reçoit une pénalité MPi de valeur nulle, le signal MNOPi correspondant passe à 0, la porte ET correspondante n'est pas passante et la valeur de comptage MCVi n'est pas appliquée au circuit de comparaison MCOMP.

De même, les valeurs de comptage en accès proportionnel PCVi fournies par les compteurs PCTi sont appliquées sur des entrées d'un circuit de comparaison PCOMP, par l'intermédiaire de portes logiques 5 de type ET. Chaque porte ET reçoit sur une deuxième entrée le signal de requête RQi émis par le circuit maître Mi de rang correspondant, et sur une troisième entrée un signal PNOPi (PNOPO, PNOP1,...PNOPn) fournit par le registre PREGi de rang correspondant. Lorsqu'un circuit maître Mi n'émet pas de requête d'accès et maintient à 0 le signal RQi, la porte ET correspondante n'est pas passante et la valeur de comptage PCVi n'est pas appliquée au circuit de comparaison PCOMP. De même, lorsqu'un registre PREGi reçoit une pénalité PPi de valeur nulle, le signal PNOPi correspondant passe à 0, la porte ET correspondante n'est pas passante et la valeur de comptage PCVi n'est pas appliquée au circuit de comparaison PCOMP.

Le circuit MCOMP fournit un signal MSEL de sélection en accès minimal et un signal NOSEL de non-sélection, et reçoit sur une entrée auxiliaire un signal STHR codé binaire dont la valeur représente le seuil THR de priorité haute décrit plus haut. Conformément à l'algorithme d'arbitrage en accès minimal selon l'invention, le signal MSEL désigne le rang de l'entrée du circuit MCOMP sur laquelle est appliquée une valeur de comptage MCVi qui est inférieure au seuil THR et qui est la plus faible de toutes les valeurs de comptage reçues par les autres entrées du circuit MCOMP. Le rang de l'entrée désignée par le signal MSEL étant le rang du circuit maître Mi correspondant, le signal MSEL désigne le circuit maître à sélectionner au titre de l'accès minimal. Comme indiqué plus haut, les valeurs de comptage MCVi qui sont inhibées par les portes ET en l'absence de requête d'accès (RQi=0), ne sont pas prises en compte dans cette sélection. D'autre part, si aucune valeur de comptage MCVi n'est inférieure au seuil THR, le signal MSEL est porté à une valeur prédéterminée et le signal NOSEL est mis à 1.

Le circuit PCOMP fournit un signal PSEL de sélection en accès proportionnel. Conformément à l'algorithme d'arbitrage en accès proportionnel selon l'invention, le signal PSEL désigne le rang de l'entrée du circuit PCOMP sur laquelle se trouve la valeur de comptage PCVi qui est supérieure aux autres valeurs de comptage reçues par les autres entrées du circuit PCOMP. Le rang de l'entrée désignée par le signal PSEL étant le rang du circuit maître Mi correspondant, le signal PSEL désigne le circuit maître à sélectionner au titre de l'accès proportionnel. Les valeurs de comptage PCVi inhibées par les portes ET en l'absence de requête d'accès (RQi=0), ne sont pas prises en compte dans cette sélection.

Les signaux MSEL, PSEL sont appliqués sur deux entrées d'un multiplexeur MUX1 dont la sortie fournit le signal de sélection SEL1. Le multiplexeur MUX1 reçoit sur une entrée de contrôle le signal NOSEL, et fournit en sortie le signal MSEL quand NOSEL est à 0, ou le signal PSEL quand le signal NOSEL est à 1. Ainsi, le signal SEL1 est égal au signal MSEL d'arbitrage en accès minimal lorsqu'un circuit maître peut être désigné au titre de l'arbitrage en accès minimal (NOSEL=0), sinon est égal au signal PSEL d'arbitrage en accès proportionnel (NOSEL=1).

Le choix de la taille des compteurs dépend de la pénalité maximale que l'on souhaite pouvoir attribuer aux circuits maîtres, et du nombre maximal d'accès en rafale possible. Si l'on vise une précision de 3% dans la répartition de la bande passante minimal et de la bande passante proportionnelle, les pénalités en accès minimal et proportionnel doivent s'étendre de 0 à 31 par pas de 1 (soit 0, 1, 2...31). Dans ce cas, si le nombre maximal d'accès en rafale est 16, les compteurs doivent pouvoir accepter des valeurs de comptage allant jusqu'à 16*32 soit 512 en valeur positive. Etant donné que les compteurs en accès minimal MCTi doivent également pouvoir compter des valeurs négatives, on choisit des compteurs 10 bits à complément par 2 pouvant compter jusqu'à -512 et +511. Les compteurs en accès proportionnel ne recevant pas de valeur négative, on peut choisir des compteurs 10 bits sans complément par 2, pouvant compter de 0 à 1023, voire de compteurs de gamme supérieure si l'on souhaite pouvoir programmer des écarts importants entre les pénalités en accès proportionnel.

Le circuit d'arbitrage ACT2 comprend également un circuit CTMCT de gestion des compteurs MCTi et PCTi.

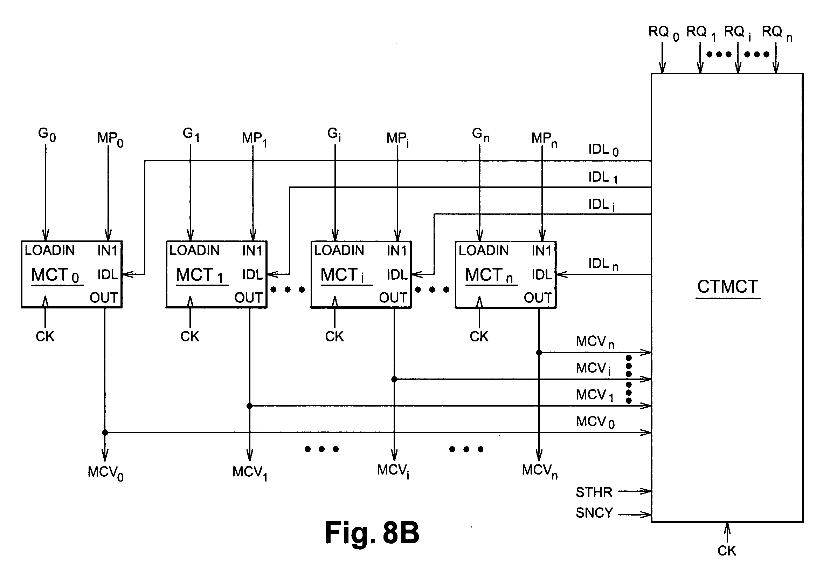

Les liaisons électriques entre le circuit de gestion CTMCT et les compteurs MCTi sont représentées en figure 8B. Chaque compteur en accès minimal MCTi comporte, en sus des entrées déjà décrites, une entrée IDL permettant de le placer dans un état d'inhibition de la valeur de comptage MCVi.

Le circuit CIMCT surveille les signaux de requête RQi émis par les circuits maîtres, ainsi que les sorties des compteurs MCTi, et reçoit sur des entrées auxiliaires un signal SNCY codé binaire représentant un seuil NCY, ainsi que le signal STHR codé binaire représentant le seuil THR de haute priorité. Le circuit CIMCT compte le nombre de cycles d'horloge intervenant entre chaque requête, et le compare au seuil NCY. Lorsqu'un signal de requête RQi n'est pas passé à 1 depuis un nombre de cycles d'horloge supérieur ou égal à NCY, le circuit CIMCT surveille alors la sortie du compteur MCTi correspondant et attend que la valeur de comptage MCVi soit égale au seuil THR. Lorsque la valeur de comptage atteint le seuil THR, le circuit CIMCT applique un signal d'inhibition IDLi sur l'entrée IDL du compteur MCTi correspondant. La valeur de comptage se trouve ainsi bloquée sur le seuil THR, jusqu'à ce que le circuit maître concerné émette à nouveau des requêtes d'accès.

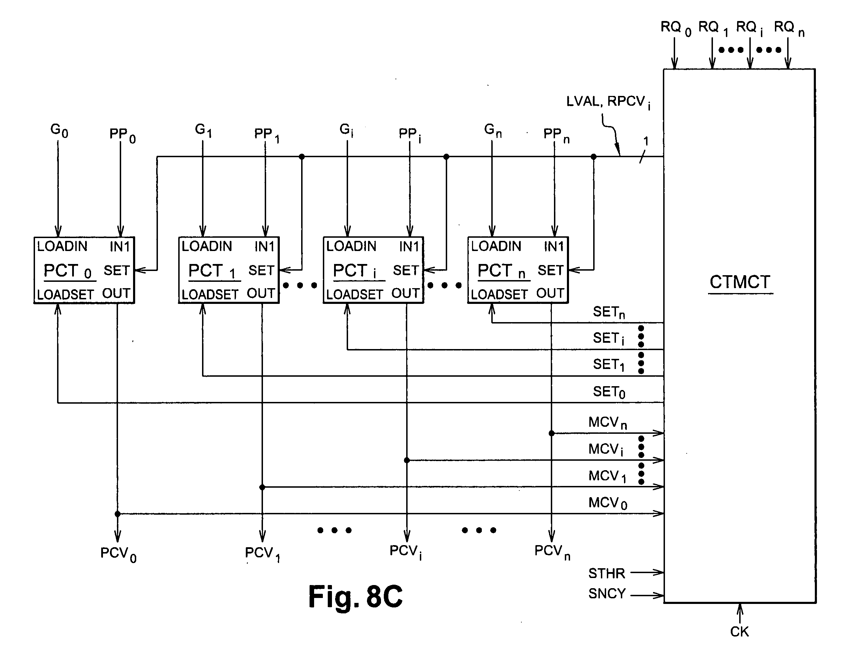

Les liaisons électriques entre le circuit de gestion CIMCT et les compteurs en accès proportionnel PCTi sont représentées en figure 8C. Chaque compteur PCTi comporte, en sus des entrées déjà décrites, une entrée non additionneuse SET et une entrée LOADSET. L'entrée SET permet de charger dans le compteur une valeur de comptage déterminée en écrasant la valeur de comptage courante. A cet effet, un signal de chargement SETi doit être appliqué sur l'entrée LOADSET du compteur.

Le circuit CTMCT surveille les signaux de requête RQi émis par les circuits maîtres, ainsi que les sorties des compteurs PCTi. Le circuit CTMCT compte le nombre de cycles d'horloge intervenant entre chaque requête, et le compare au seuil NCY décrit plus haut. Lorsqu'un signal de requête RQi n'est pas passé à 1 depuis un nombre de cycles d'horloge supérieur ou égal à NCY, le circuit CTMCT lit les sorties de tous les compteurs PCTi et recherche la plus faible valeur de comptage PCVi, que l'on désignera LVAL. Le circuit CIMCT charge ensuite cette plus faible valeur de comptage dans le compteur PCTi du circuit maître qui n'émet plus de requête d'accès, en appliquant la valeur LVAL sur l'entrée SET du compteur et en appliquant un signal de chargement SETi sur l'entrée LOADSET du compteur.

Ainsi, lorsqu'un circuit maître n'émet plus de requête d'accès pendant une période de temps déterminée, sa valeur de comptage PCVi est portée à une valeur égale à la plus faible valeur de comptage des circuits maîtres restant actifs. On évite ainsi qu'un circuit maître ayant été inactif pendant un certain temps né se retrouve avec une valeur de comptage très faible relativement aux autres circuits maîtres, et ne bénéficie de toute la bande passante proportionnelle lorsqu'il redevient actif.

Le circuit CTMCT assure également la gestion de la fenêtre de comptage des compteurs PCTi. En effet les valeurs de comptage en accès proportionnel sont sans cesse incrémentées des pénalités en accès proportionnel et ne sont jamais décrémentées. Afin d'éviter la saturation des compteurs, les valeurs de comptage sont diminuées d'une valeur égale à la demi-fenêtre de comptage HCR ("Half Counter Range"), par exemple 512, lorsqu'elles se trouvent toutes dans la demi-fenêtre de comptage supérieure du compteur, par exemple entre 512 et 1024. Dans ce cas, le circuit CTMCT calcule pour chaque valeur de comptage PCVi une valeur de comptage réduite RPCVi telle que :

$$(17) \qquad RPCVi = PCVi - HCR$$

et charge cette valeur de comptage réduite RPCVi dans le compteur PCTi correspondant, par l'intermédiaire de l'entrée SET du compteur, en appliquant le signal SETi sur l'entrée LOADSET du compteur.

Il apparaîtra clairement à l'homme de l'art que la présente invention est susceptible de diverses variantes et modes de réalisation.

Notamment, bien que l'on ait décrit dans ce qui précède un mode de gestion des valeurs de comptage selon lequel les valeurs de comptage MCVi sont décrémentées au rythme du signal d'horloge et sont incrémentées des pénalités en accès minimal, un mécanisme inverse peut être prévu. Dans ce cas, les valeurs de comptage MCVi sont incrémentées au rythme du signal d'horloge et sont décrémentées avec les pénalités en accès minimal. Dans ce cas, le seuil de haute priorité n'est pas un seuil inférieur mais un seuil supérieur à atteindre pour bénéficier de l'accès à la ressource commune. De même, les valeurs de comptage PCVi peuvent être décrémentées avec les pénalités en accès proportionnel au lieu d'être incrémentées. Dans ce cas, le circuit maître prioritaire au titre de l'accès proportionnel est celui dont la valeur de comptage est la plus élevée.

Egalement, au lieu d'attribuer des pénalités MPi différentes aux circuits maîtres et de décrémenter les valeurs de comptage MCVi avec le même décrément D à chaque cycle d'horloge, une variante de réalisation comprend le fait d'attribuer des pénalités identiques et d'attribuer des décréments "Di" (D0, D1,...Dn) variables, ce qui conduit au même effet technique puisque c'est le rapport entre la valeur d'une pénalité et le décrément qui détermine le nombre de cycle d'horloge entre deux autorisations d'accès au titre de l'accès minimal (soit la base de temps attribuée à chaque circuit maître).

De façon générale, les deux mécanismes d'arbitrage selon l'invention sont indépendants l'un de l'autre et peuvent être mis en oeuvre chacun indépendamment de l'autre ou en combinaison. Ainsi, on a indiqué plus haut que l'arbitrage peut être entièrement géré par le mécanisme en accès minimal. Il est également possible de confier à un procédé d'arbitrage classique (priorité fixe, Round Robin...) la bande passante laissée libre par l'arbitrage en accès minimal. Il peut s'agir notamment du procédé d'arbitrage par défaut prévu dans le circuit standard BMUX décrit plus haut.

Comme proposé plus haut, la combinaison des deux mécanismes d'arbitrage est de préférence interactive, ce qui signifie que les deux valeurs de comptage d'un même circuit maître sont incrémentées à chaque accès à la ressource partagée, que cet accès soit accordé en vertu de l'arbitrage en accès minimal ou de l'arbitrage en accès proportionnel. Cela conduit à des scénarios d'arbitrage du type représenté sur les figures 6A, 6B, 7A, 7B. Toutefois, la combinaison des deux mécanismes d'arbitrage peut aussi être mise en oeuvre sans interactivité entre les mécanismes d'arbitrage, tout en laissant la priorité à l'arbitrage en accès minimal.

Enfin, le procédé d'arbitrage selon l'invention est susceptible de diverses autres applications. De façon générale, la mise en oeuvre du procédé selon l'invention peut revêtir des formes diverses et le procédé peut être appliqué à divers éléments. Les moyens d'accès à la ressource partagée peuvent revêtir diverses autres formes que celle d'un circuit de multiplexage. Il peut s'agir par exemple d'un générateur de signaux d'autorisation qui, à partir de la valeur courante du signal de sélection SEL, autorise tel élément à utiliser la ressource et interdit aux autres d'utiliser la ressource.

**Revendications**

1. Procédé d'arbitrage de l'accès à une ressource (BSH, PPH) qui est partagée par plusieurs éléments électroniques (Mi) et qui est accessible selon des cycles d'accès (AC) cadencés par un signal d'horloge (CK), dans lequel chaque élément (Mi) souhaitant accéder à la ressource partagée émet une requête d'accès (RQi, BSi), procédé **caractérisé en ce que** :

   - chaque élément (Mi) se voit attribuer une première valeur de comptage (MCVi) et une première pénalité (MPi),
   - la première valeur de comptage (MCVi) de chaque élément est décrémentée, ou incrémentée, en synchronisation avec le signal d'horloge,
   - la première valeur de comptage (MCVi) de chaque élément est incrémentée, ou respectivement décrémentée, d'une valeur égale à la première pénalité (MPi), chaque fois que l'élément est sélectionné pour un cycle d'accès, et
   - lorsque plusieurs éléments attendent simultanément d'accéder à la ressource partagée, un élément est sélectionné pour accéder à la ressource si sa première valeur de comptage est inférieure ou égale, ou respectivement supérieure ou égale, à un seuil déterminé (THR), et si sa première valeur de comptage est inférieure, ou respectivement supérieure, aux premières valeurs de comptage des autres éléments ayant émis une requête d'accès.

2. Procédé selon la revendication 1, dans lequel un élément est sélectionné quelle que soit sa première valeur de comptage, s'il est le seul à demander l'accès à la ressource partagée.

3. Procédé selon l'une des revendications 1 et 2, dans lequel, lorsque deux éléments susceptibles d'être sélectionnés ont la même première valeur de comptage (MCVi), l'élément à sélectionner est désigné en appliquant une règle de sélection prédéterminée.

4. Procédé selon l'une des revendications 1 à 3, dans lequel les requêtes d'accès (RQi, BSi) peuvent porter sur plusieurs cycles d'accès successifs et, lorsqu'un élément ayant émis une requête d'accès portant sur plusieurs cycles d'accès est sélectionné, l'accès à la ressource partagée est accordé à l'élément pendant le nombre (Bi) de cycles d'accès demandés, même si, après le premier cycle d'accès de l'élément, l'élément n'est plus sélectionnable en vertu de sa première valeur de comptage.

5. Procédé selon la revendication 4, dans lequel la première valeur de comptage d'un élément est inhibée (MCVi=THR) lorsque l'élément n'émet pas de requête d'accès pendant un nombre déterminé de cycles d'accès.

6. Procédé selon l'une des revendications 1 à 5, dans lequel :

   - chaque élément (Mi) se voit attribuer une seconde valeur de comptage (PCVi) et une seconde pénalité (PPi),
   - la seconde valeur de comptage (PCVi) de chaque élément est incrémentée, ou décrémentée, d'une valeur égale à la seconde pénalité (PPi), chaque fois que l'élément est sélectionné, et

   lorsque plusieurs éléments attendent simultanément d'accéder à la ressource partagée, si aucun élément n'est sélectionnable en vertu de sa première valeur de comptage (MCVi), l'élément sélectionné est celui dont la seconde valeur de comptage (PCVi) est inférieure, ou respectivement supérieure, aux secondes valeurs de comptage des autres éléments ayant émis une requête d'accès.

7. Procédé selon la revendication 6, dans lequel la seconde valeur de comptage (PCVi) d'un élément est maintenue à une valeur déterminée (LVAL) lorsque l'élément n'émet pas de requête d'accès pendant un nombre déterminé de cycles d'accès.

8. Procédé selon la revendication 7, dans lequel la seconde valeur de comptage (PCVi) d'un élément n'ayant pas émis de requête d'accès pendant un nombre déterminé de cycles d'accès, est maintenue à une valeur (LVAL) égale à la plus faible seconde valeur de comptage des éléments émettant des requêtes d'accès.

9. Procédé selon l'une des revendications 6 à 8, dans lequel la première valeur de comptage (MCVi) de chaque élément (Mi) est incrémentée, ou respectivement décrémentée, d'une valeur égale à la première pénalité (MPi), chaque fois que l'élément est sélectionné en vertu de sa seconde valeur de comptage (PCVi), et réciproquement la seconde valeur de comptage (PCVi) de chaque élément est également incrémentée, ou respectivement décrémentée, d'une valeur égale à la seconde pénalité (PPi), chaque fois que l'élément est sélectionné en vertu de sa première valeur de comptage (MCVi).

10. Procédé selon l'une des revendications 4 à 6, dans lequel les requêtes d'accès (RQi, BSi) peuvent porter sur plusieurs cycles d'accès successifs et, lorsqu'un élément ayant émis une requête d'accès portant sur plusieurs cycles d'accès est sélectionné, l'accès à la ressource partagée est accordé à l'élément pendant le nombre (Bi) de cycles d'accès demandés, même si, après le premier cycle d'accès de l'élément, l'élément n'est plus sélectionnable en vertu de ses première et seconde valeurs de comptage.

11. Procédé selon l'une des revendications 1 à 7, appliqué à un dispositif dans lequel la ressource partagée est un bus de données (BSH) relié à un ou plusieurs circuits périphériques (PPH) par l'intermédiaire d'un circuit de multiplexage d'accès (BMUX), les éléments électroniques (Mi) étant des circuits maîtres relativement aux circuits périphériques.

12. Procédé selon la revendication 11, dans lequel le circuit de multiplexage d'accès (BMUX) fournit des signaux de contrôle (Gi) désignant le circuit maître sélectionné à chaque cycle d'accès, et dans lequel les signaux de contrôle sont utilisés pour identifier les valeurs de comptage (MCVi, PCVi) devant être décrémentées ou incrémentées à chaque accès au bus de données.

13. Dispositif (BMUX, BMCT, ACT2) d'arbitrage de l'accès à une ressource (BSH, PPH) partagée par plusieurs éléments électroniques (Mi), la ressource partagée étant accessible selon des cycles d'accès (AC) cadencés par un signal d'horloge (CK), chaque élément (Mi) souhaitant accéder à la ressource partagée devant émettre une requête d'accès (RQi, BSi), dispositif **caractérisé en ce qu'**il comprend :

   - des premiers registres (MREGi) pour mémoriser, pour chaque élément, une première pénalité (MPi) attribuée individuellement à chaque élément (Mi),
   - des premiers compteurs (MCTi) pour attribuer individuellement à chaque élément une première valeur de comptage (MCVi), et pour décrémenter, ou incrémenter, la première valeur de comptage en synchronisation avec le signal d'horloge, et incrémenter, ou respectivement décrémenter, la première valeur de comptage d'une valeur égale à la première pénalité (MPi), chaque fois que l'élément correspondant est sélectionné pour un cycle d'accès, et
   - un premier circuit de comparaison (MCOMP) pour fournir, lorsque plusieurs éléments attendent simultanément d'accéder à la ressource partagée, un premier signal de sélection (MSEL) désignant un élément dont la première valeur de comptage (MCVi) est inférieure ou égale, ou respectivement supérieure ou égale, à un seuil déterminé (THR), et dont la première valeur de comptage est inférieure, ou respectivement supérieure, aux premières valeurs de comptage des autres éléments ayant émis une requête d'accès.

14. Dispositif selon la revendication 13, comprenant des moyens (PCOMP, MUX1, PSEL) pour sélectionner un élément qui se trouve seul à demander l'accès à la ressource partagée, quelle que soit la première valeur de comptage de l'élément.

15. Dispositif selon l'une des revendications 13 et 14, dans lequel, lorsque deux éléments ont la même première valeur de comptage (MCVi), le premier circuit de comparaison (MCOMP) est agencé pour sélectionner l'un de ces éléments selon une règle de sélection prédéterminée.

**16.** Dispositif selon l'une des revendications 13 à 15, comprenant un circuit (CIMCT) de gestion des premiers compteurs (MCTi) pour inhiber la première valeur de comptage (MCVi) d'un élément (Mi) qui n'a pas émis de requête d'accès pendant un nombre déterminé de cycles d'accès.

**17.** Dispositif selon l'une des revendications 13 à 16, comprenant en outre :

- des seconds registres (PREGi) pour mémoriser, pour chaque élément, une seconde pénalité (PPi) attribuée individuellement à chaque élément (Mi),
- des seconds compteurs(PCTi) pour attribuer individuellement à chaque élément une seconde valeur de comptage (PCVi), et pour incrémenter, ou décrémenter, la seconde valeur de comptage d'une valeur égale à la seconde pénalité (PPi), chaque fois que l'élément correspondant est sélectionné pour un cycle d'accès, et

un second circuit de comparaison (PCOMP) pour fournir, lorsque plusieurs éléments attendent simultanément d'accéder à la ressource partagée, un second signal de sélection (PSEL) désignant un élément dont la seconde valeur de comptage (PCVi) est inférieure, ou respectivement supérieure, aux secondes valeurs de comptage des autres éléments ayant émis une requête d'accès.

**18.** Dispositif selon la revendication 17, dans lequel les premier (MSEL) et second (PSEL) signaux de sélection sont appliqués à un circuit multiplexeur dont la sortie fournit un signal de sélection général (SEL) égal au second signal de sélection (PSEL) lorsque le premier circuit de comparaison (MCOMP) ne trouve aucun élément à sélectionner, sinon égal au premier signal de sélection (MSEL).

**19.** Dispositif selon l'une des revendications 17 et 18, dans lequel la première valeur de comptage (MCVi) de chaque élément est incrémentée, ou respectivement décrémentée, d'une valeur égale à la première pénalité (MPi), chaque fois que l'élément est sélectionné en vertu de sa seconde valeur de comptage (PCVi), et réciproquement la seconde valeur de comptage (PCVi) de chaque élément est incrémentée, ou respectivement décrémentée, d'une valeur égale à la seconde pénalité (PPi) chaque fois que l'élément est sélectionné en vertu de sa première valeur de comptage (MCVi).

**20.** Dispositif selon l'une des revendications 17 à 19, comprenant un circuit (CTMCT) de gestion des seconds compteurs (PCTi) pour maintenir la seconde valeur de comptage (PCVi) d'un élément à une valeur déterminée (LVAL) lorsque l'élément n'émet pas de requête d'accès (RQi) pendant un nombre déterminé de cycles d'accès.

**21.** Dispositif selon la revendication 20, dans lequel le circuit de gestion des seconds compteurs maintient la seconde valeur de comptage (PCVi) d'un élément n'ayant pas émis de requête d'accès pendant un nombre déterminé de cycles d'accès, à une valeur (LVAL) égale à la plus faible seconde valeur de comptage des éléments émettant des requêtes d'accès.

**22.** Dispositif selon l'une des revendications 17 à 21, comprenant un circuit (BMCT) de gestion de requêtes d'accès en rafale qui est agencé pour maintenir la sélection (SEL2) d'un élément sélectionné, même si, après le premier cycle d'accès accordé à l'élément, cet élément n'est pas sélectionnable en vertu de sa première ou seconde valeur de comptage.

**23.** Dispositif selon l'une des revendications 17 à 22, comprenant un circuit de multiplexage d'accès (BMUX) pour relier à la ressource partagée, à chaque cycle d'accès, un élément sélectionné.

**24.** Dispositif selon la revendication 23, dans lequel le circuit de multiplexage d'accès (BMUX) fournit des signaux de contrôle (Gi) désignant le circuit maître (Mi) sélectionné à chaque cycle d'accès, les signaux de contrôle étant appliqués aux compteurs en tant que signaux de chargement (LOADIN), pour le chargement de la première ou de la seconde pénalité.

**25.** Dispositif selon l'une des revendications 17 à 24, dans lequel la ressource partagée est un bus (BSH) relié à un ou plusieurs circuits périphériques (PPH), les éléments électroniques (Mi) étant des circuits maîtres relativement aux circuits périphériques.

**Fig. 1**

**Fig. 2**

EP 1 530 132 A2

**Fig. 3A**

**Fig. 3B**

**Fig. 3C**

**Fig. 3D**

EP 1 530 132 A2

Fig. 4A

Fig. 4B

Fig. 4C

**Fig. 5A**

**Fig. 5B**

**Fig. 5C**

**Fig. 5D**

**Fig. 5E**

Fig. 6A

Fig. 6B

AC=5CK

Fig. 7A

Fig. 7B

Fig. 8A

**Fig. 8B**

EP 1 530 132 A2

**Fig. 8C**

EP 1 530 132 A2